# EUROPEAN PATENT APPLICATION

(11) **EP 4 465 170 A1**
(43) Date of publication of application: **20.11.2024**
(21) Application number: 23765799.4
(22) Date of filing: 23.02.2023
(51) Int. Cl.: G06F 8/76

(54) **METHOD FOR RUNNING APPLICATION PROGRAM IN CROSS-SYSTEM MANNER, AND ELECTRONIC DEVICE**

(30) Priority: 09.03.2022 CN 202210230654
(71) Applicant: Huawei Technologies Co., Ltd., Shenzhen, Guangdong 518129 (CN)
(72) Inventor: JIANG, Zhiheng, Shenzhen, Guangdong 518129 (CN); DONG, Ganggang, Shenzhen, Guangdong 518129 (CN); WEN, Ping, Shenzhen, Guangdong 518129 (CN)
(74) Representative: Gill Jennings & Every LLP
(86) International application number: PCT/CN2023/077891
(87) International publication number: WO 2023/169221

(57) **Abstract**

A method for running an application across systems is provided. The method is applied to an electronic device that is equipped with a first software system and a second software system. The second software system is run based on the first software system. The method includes: in response to an obtained first operation, obtaining, through the first software system, application information of at least one target application in the second software system, where the target application is an application that has been installed in the second software system, and the application information includes one or more of an icon, an identifier, and an executable path that are of the target application; and displaying, in the first software system, a desktop icon of the target application. Therefore, an application in the second software system is quickly started in the first software system, so that a manner of starting the application in the second software system is the same as a manner of starting an application in the first software system. In this way, a user can operate, in the first software system, the application in the second software system without distinction. Therefore, user experience is improved.

## Description

This application claims priority to Chinese Patent Application No. 202210230654.8, filed with the China National Intellectual Property Administration on March 9, 2022 and entitled "METHOD FOR RUNNING APPLICATION ACROSS SYSTEMS, AND ELECTRONIC DEVICE", which is incorporated herein by reference in its entirety.

### TECHNICAL FIELD

This application relates to the field of terminal technologies, and in particular, to a method for running an application across systems, an apparatus, and an electronic device.

### BACKGROUND

With continuous development of electronic devices, one electronic device may be equipped with different software systems, and different applications may be installed in different software systems, to adapt to different scenarios. For example, an electronic device may be equipped with an Android (Android) system and a Linux system, or an Android (Android) system and a Windows system, or the like.

When the electronic device is equipped with different software systems, the electronic device may use one of the software systems as a primary system, and use another system as a secondary system. The secondary system may be installed or may be run in a virtual machine or a container. For example, an electronic device is equipped with an Android system and a Linux system. The electronic device may use the Android system as a primary system of the electronic device, and use the Linux system as a secondary system of the electronic device. The Linux system may be installed in a virtual machine. When the electronic device is equipped with different software systems, because compatibility across the different software systems is relatively poor, it is difficult for a user to indiscriminately use, in one of the software systems, another software system. For example, it is difficult to perform, in a manner of performing an operation on an application in one software system, an operation on an application in another software system.

### SUMMARY

This application provides a method for running an application across systems, an electronic device, a computer-readable storage medium, a computer program product, and a chip system, so that another software system can be used in a software system without distinction.

According to a first aspect, this application provides a method for running an application across systems. The method may be applied to an electronic device. The electronic device may be equipped with a first software system and a second software system. The second software system is run based on the first software system. The method may include: in response to an obtained first operation, obtaining, through the first software system, application information of at least one target application in the second software system, where the target application is an application that has been installed in the second software system, and the application information includes one or more of an icon, an identifier, and an executable path that are of the target application; and displaying, in the first software system, a desktop icon of the target application.

In this way, the desktop icon of the application in the second software system is displayed in the first software system, so that a user can quickly start the application in the second software system by tapping the desktop icon that is of the application in the second software system and that is displayed in the first software system. In this case, a manner of starting the application in the second software system is the same as a manner of starting an application in the first software system, so that a user can perform, in the first software system, an operation on the application in the second software system without distinction. Therefore, user experience is improved.

In a possible implementation, the first software system is an Android system, and the second software system is a Linux system.

In a possible implementation, the obtaining, through the first software system, application information of at least one target application in the second software system specifically includes: launching, in the first software system, a first main activity in a proxy Android application package APK based on the first operation; sending a first message to the second software system by using the first main activity, where the first message is used to obtain the application information of the at least one target application in the second software system; and obtaining, by using the first main activity, a second message fed back by the second software system, where the second message includes the application information of the at least one target application. Therefore, the first software system communicates with the second software system. For example, the first operation may be an operation of launching the proxy APK.

In a possible implementation, the displaying, in the first software system, a desktop icon of the target application specifically includes: registering the application information of the target application with a desktop launcher launcher of the first software system by using the first main activity, to display, in the first software system, the desktop icon of the target application.

In a possible implementation, after the displaying, in the first software system, a desktop icon of the target application, the method further includes: controlling the first main activity to end running. Therefore, a life cycle of the first main activity is controlled and received after the desktop icon of the target application is displayed in the first software system, so that an objective of displaying, in the first software system, the application of the second software system is implemented by using a solution for managing an activity life cycle.

In a possible implementation, before the sending a first message to the second software system by using the first main activity, the method further includes: determining, by using the first main activity, whether the first software system meets a running environment of the second software system; and if yes, sending the first message to the second software system by using the first main activity; or if no, automatically installing the second software system, or displaying prompt information on a display interface of the first software system, where the prompt information is used to prompt to install the second software system. In this way, detection is performed on the running environment of the second software system, so that the method can be performed when the running environment of the second software system is met. Therefore, system stability is improved.

In a possible implementation, after the displaying, in the first software system, a desktop icon of the target application, the method further includes: in response to an obtained second operation, launching, in the first software system, a second main activity in the proxy Android application package APK, where the second operation is an operation of starting the target application; notifying, by using the second main activity, the second software system to start the target application, and the proxy APK to create a first application activity associated with the target application; obtaining, by using the app activity 1, an application interface that is of the target application and that is sent by the second software system; and displaying, in the first software system, the application interface of the target application. In this way, the user can start and run, in the first software system, the application in the second software system without distinction. Therefore, user experience is improved.

In a possible implementation, after the notifying, by using the second main activity, the second software system to start the target application, and the proxy APK to create a first application activity associated with the target application, the method further includes: controlling the second main activity to end running.

In a possible implementation, after the displaying, in the first software system, the application interface of the target application, the method further includes: obtaining a third operation by using the app activity 1, where the third operation is an operation of launching a sub-interface in the application interface; notifying, by using the app activity 1, the second software system to launch the sub-interface in the application interface; obtaining, by using the proxy APK, the sub-interface in the application interface sent by the second software system, and creating a second application activity associated with the sub-interface; and displaying, in the first software system, the sub-interface in the application interface. In this way, one app activity is created for each of different interfaces of one target application, so that an app activity corresponding to a specific interface can accurately identify an operation performed by the user on the interface. This avoids a case in which one target application corresponds to only one app activity and therefore it is difficult for the app activity to accurately identify an operation of the user. As a result, the operation of the user can be responded to in real time, and user experience is improved.

In a possible implementation, after the displaying, in the first software system, the sub-interface in the application interface, the method further includes: controlling the app activity 1 to suspend running.

In a possible implementation, after the displaying, in the first software system, the sub-interface in the application interface, the method further includes: in response to an operation that is of closing the sub-interface and that is obtained by the app activity 2, controlling the app activity 2 to end running, and/or controlling the app activity 1 to switch from a running-suspended state to a running-resumed state.

In a possible implementation, after the displaying, in the first software system, the application interface of the target application, the method further includes: in response to an operation that is of closing the application interface and that is obtained by the app activity 1, controlling the app activity 1 to end running. When the app activity 2 associated with the sub-interface in the application interface is created, the proxy APK controls the app activity 2 associated with the sub-interface in the application interface to end running.

According to a second aspect, this application provides an apparatus for running an application across systems. The apparatus is included in an electronic device. The apparatus has a function of implementing the method according to any one of the first aspect or the possible implementations of the first aspect.

According to a third aspect, this application provides an electronic device, including a processor. The processor is configured to run a computer program stored in a memory, so that the electronic device performs the method according to any one of the first aspect or the possible implementations of the first aspect.

According to a fourth aspect, this application provides a computer-readable storage medium. The computer-readable storage medium stores a computer program, and when the computer program is executed by a processor, the method according to any one of the first aspect or the possible implementations of the first aspect is performed.

According to a fifth aspect, this application provides a computer program product. When the computer program product runs on an electronic device, the electronic device is enabled to perform the method according to any one of the first aspect or the possible implementations of the first aspect.

According to a sixth aspect, this application provides a chip system. The chip system includes a memory and a processor, and the processor executes a computer program stored in the memory, to perform the method according to any one of the first aspect or the possible implementations of the first aspect.

It may be understood that, for beneficial effects of the second aspect to the sixth aspect, refer to related descriptions in the first aspect. Details are not described herein again.

### BRIEF DESCRIPTION OF DRAWINGS

The following briefly describes the accompanying drawings used for describing embodiments or the prior art.
FIG. 1 is a diagram of running, on a desktop of an Android system, an application in a Linux system according to an embodiment of this application;
FIG. 2 is a diagram of a system architecture of a software system equipped on an electronic device according to an embodiment of this application;
FIG. 3 is a diagram of displaying, on a desktop of an Android system, an icon of an application in a Linux system according to an embodiment of this application;
FIG. 4A to FIG. 4C are schematic flowcharts of a method for running an application across systems according to an embodiment of this application;
FIG. 5 is a diagram of a process of prompting a user to install a Linux system according to an embodiment of this application;
FIG. 6 is a diagram of switching, on a desktop of an Android system, a display interface of an application in a Linux system according to an embodiment of this application;
FIG. 7 is a diagram of switching, on a desktop of an Android system, a display interface of an application in a Linux system according to an embodiment of this application;
FIG. 8 is a diagram of switching, on a desktop of an Android system, a display interface of an application in a Linux system according to an embodiment of this application;
FIG. 9 is a diagram of a process of performing an operation on an application in a Linux system across systems in an Android system according to an embodiment of this application;
FIG. 10 is a process of managing a life cycle of an activity in an Android system according to an embodiment of this application;
FIG. 11 is a diagram of a structure of an electronic device according to an embodiment of this application; and
FIG. 12 is a diagram of a structure of a chip according to an embodiment of this application.

### DESCRIPTION OF EMBODIMENTS

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this specification, the terms "first", "second", and so on are intended to distinguish between different objects, but do not indicate a particular order of the objects. For example, a first response message, a second response message, and the like are used to distinguish between different response messages, but do not indicate a particular order of the response messages.

In embodiments of this application, the term such as "example" or "for example" represents giving an example, an illustration, or a description. Any embodiment or design scheme described as an "example" or "for example" in embodiments of this application shall not be explained as being more preferred or having more advantages than another embodiment or design scheme. To be precise, use of the term such as "example" or "for example" is intended to present a related concept in a specific manner.

In the descriptions of embodiments of this application, unless otherwise specified, "a plurality of" means two or more. For example, a plurality of processing units means two or more processing units. A plurality of elements means two or more elements.

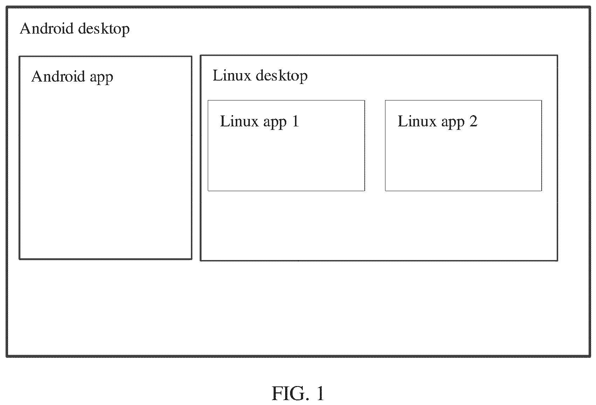

Generally, an example in which an electronic device is equipped with an Android system and a Linux system, and a primary system of the electronic device is the Android system is used. When the Linux system needs to be used, the Linux system usually needs to be run in a virtual machine or a container, and a desktop of the Linux system is displayed as a window on a desktop of the Android system. When a user performs an operation on an application in the Linux system, the user can only perform the operation in a window in which the desktop of the Linux system is located. In addition, regardless of how many applications in the Linux system are run, scopes of the applications can only be within the window in which the desktop of the Linux system is located, and the applications cannot be independently moved, scaled, and the like. As a result, user experience is relatively poor. For example, as shown in FIG. 1, the user runs three applications and two independent windows in the Android system. The three applications are respectively an Android app, a Linux app 1, and a Linux app 2. The Android app is displayed, in a form of independent window, on the Android desktop (namely, the desktop of the Android system). The two applications, the Linux app 1 and the Linux app 2, are displayed on the Linux desktop (namely, the desktop of the Linux system), and the entire Linux desktop is displayed, as one window of the Android system, on the Android desktop.

Therefore, this application provides a method for performing an operation on an application across systems. The electronic device may run, in addition to a first software system, a second software system by using the virtual machine, the container, or the like, and run the application by using the second software system. The electronic device may further display, on an interface of the first software system, an application that has been installed and/or run in the second software system, so that the user can perform, in the first software system, an operation on an application in the second software system in a manner of an operation performed in the first software system. Therefore, the user can use, in the first software system, the second software system without distinction. As a result, performing an operation on an application across systems is implemented, and user experience is improved.

The following describes an architecture of a software system of an electronic device by using an example in which the electronic device is equipped with an Android system and runs a Linux system by using a container.

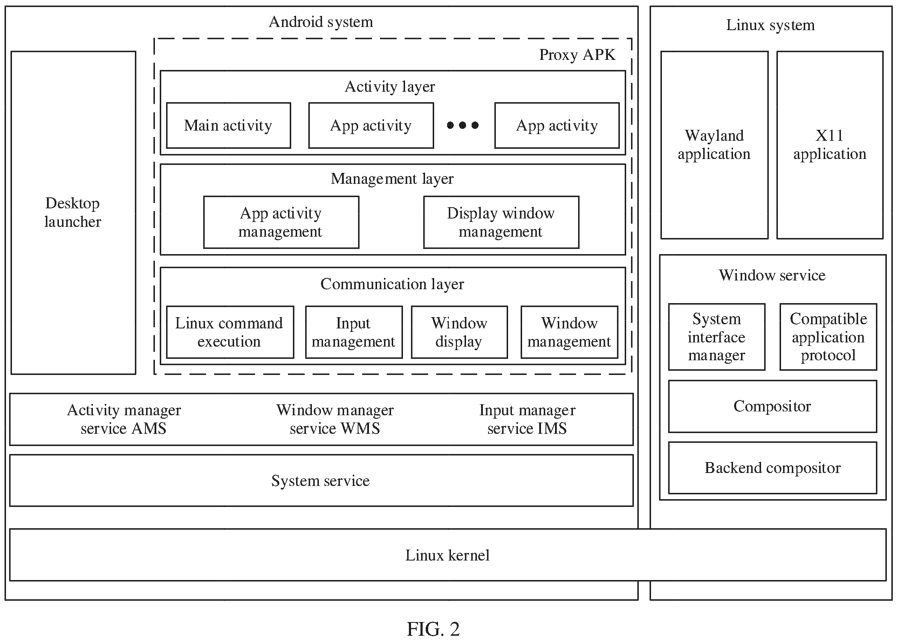

For example, FIG. 2 shows a system architecture of a software system equipped on an electronic device. A first software system of the electronic device is an Android (Android) system, and a second software system is a Linux system. As shown in FIG. 2, the Android system and the Linux system both use a Linux kernel (Linux kernel). In addition, the Android system may further include an application framework (Application Framework) layer and an application layer. The Linux system includes a window service (weston) and a plurality of applications.

The application framework layer of the Android system may include an input manager service (input manager service, IMS), an activity manager service (activity manager service, AMS), a window manager service (window manager service, WMS), and a system service (surface flinger). The IMS is mainly used to manage an input operation detected by the electronic device. The AMS is mainly used to manage an activity (activity) of each application. The WMS is mainly used to manage a window of each application. The system service (surface flinger) is mainly responsible for a service process of composing all display layers of the Android system.

The application layer of the Android system may include a desktop launcher (launcher) and a proxy Android application package (android application package, APK). The desktop launcher is mainly used to display and manage another application (application, App) on the electronic device. The proxy APK is mainly used to perform data exchange with the Linux system, display an application installed in the Linux system, run the application in the Linux system, and the like.

It should be noted that the Android system of the electronic device may further include a hardware abstraction layer and a system runtime library that are not shown in FIG. 2. The system runtime library may include an Android runtime library, and the Android runtime library may include a kernel library and a virtual machine. The system runtime library may further include a C library or a C++ library. Details are not described herein again.

The plurality of applications in the Linux system may include a plurality of X11 applications (X11 APPs) and a plurality of wayland applications (wayland apps). The X11 application is an application that matches an old X11 protocol. The wayland application is an application that matches a new wayland protocol.

In addition, the window service (weston) of the Linux system may include a system interface manager (desktop-shell), a compatible application protocol (xwayland), a compositor (compositor), and a backend compositor (compositor backend). The system interface manager is used to manage a global interface of the Linux system. The compatible application protocol is used to be compatible with each X11 application in addition to matching each wayland application. The compositor is used to combine layers of an application, to obtain a composited interface. The backend compositor is used to process the composited interface.

In embodiments of this application, a proxy APK of the application layer may be enabled in the Android system of the electronic device. The Android system may perform data exchange with the Linux system through the proxy APK, display, on a desktop of the Android system, an icon of an application that has been installed in the Linux system, run the application in the Linux system, and the like.

Further, still refer to FIG. 2. FIG. 2 further shows a software architecture of the proxy APK. As shown in FIG. 2, the software architecture of the proxy APK may include a communication layer (native), a management layer (myservice), and an activity layer (activity).

As a communication channel between the proxy APK and the Linux system, native is used to transmit information to the Linux system, and may also receive information fed back by the Linux system. For example, the proxy APK may, through native, send, to the Linux system, a control instruction used to start the application located in the Linux system, send a detected input event to the Linux system through native, and may further receive window display information (for example, refreshing of a displayed interface), window management information (for example, an adjustment of a display size or location), or the like that are fed back by the Linux system.

Myservice is mainly used to manage an app activity, for example, create or destroy a specific app activity, to manage a life cycle of the app activity. For example, myservice may be further configured to: perform channel connection to a container of the Linux system, and initialize a window, a session, input, or the like of a Linux application run in the Android system.

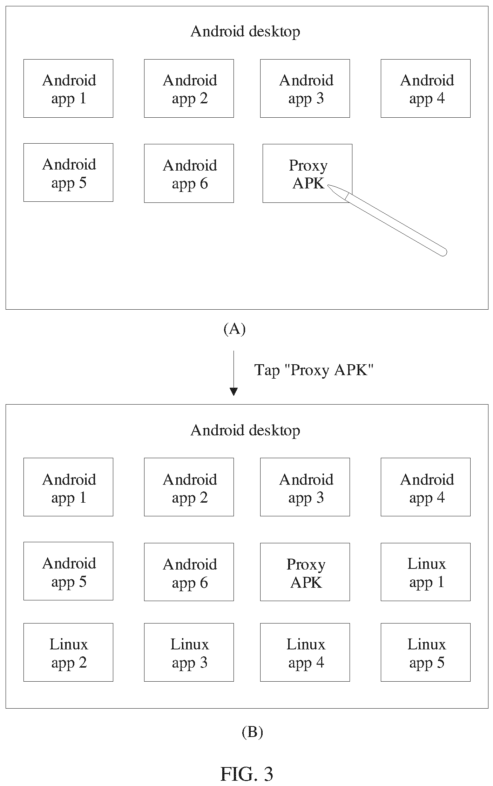

A main (main) activity and an application (app) activity may be included in activity. The main activity is a main application of the proxy APK, and is mainly used to perform data exchange with the Linux system, to obtain icon information, an application identifier, an executable path of an application, and the like of an application that has been installed in the Linux system, and register the information with the desktop launcher (launcher). In this way, the icon of the application that has been installed in the Linux system can be generated and displayed on the desktop of the Android system, and the application in the Linux system can be run on the desktop of the Android system by performing, on the desktop of the Android system, an operation on an application icon in the Linux system. For example, as shown in (A) in FIG. 3, a plurality of application icons, for example, an icon of an Android app 1, an icon of an Android app 2, and an icon of the proxy APK, are displayed on the Android desktop. Still refer to (A) in FIG. 3. After a user taps the icon of the proxy APK on the Android desktop, the main activity of the proxy APK may interact with Linux, and related information of the application that has been installed in the Linux system is registered with the Android system, so that the application icon in the Linux system can be displayed in the Android system. In other words, an interface shown in (B) in FIG. 3 is displayed. In some embodiments, the icon information of the application may be information of an icon of an application displayed on a desktop of the Linux system. The application identifier may be a name, identification (identification, ID), or other information uniquely indicating the application, which are of the application. The executable path of the application may be a storage location of the application located in the Linux system.

The app activity may be an activity that corresponds to an application run in the Linux system and that is in the Android system, or an activity corresponding to a submenu in an application that is in the Linux system and that is run in the Android system. For example, after the user performs, on the desktop of the Android system, an operation on the application icon in the Linux system, the Android system may create an app activity corresponding to an application selected by the user. In addition, when a window for running the application in the Linux system has been displayed on the desktop of the Android system, and the user selects, in the window, a submenu in the application, an activity corresponding to the submenu may also be created in the Android system. For example, an activity corresponding to an application may be understood as an activity corresponding to a home screen of the application. A submenu of the application may be understood as a sub-interface on the home screen of the application.

Each app activity may collect a triggered input event, send a collected input event to the Linux system through native, receive, through native, information fed back by the Linux system based on the input event, and then refresh, based on the information fed back by the Linux system, an interface currently displayed by the app activity (for example, a display of a floating box, blinking of an icon, and a change of a color), or adjust a window displayed by the app activity (for example, adjust a size or a position of the window).

The following describes, based on the content described above, a method for performing an operation on an application across systems provided in an embodiment of this application.

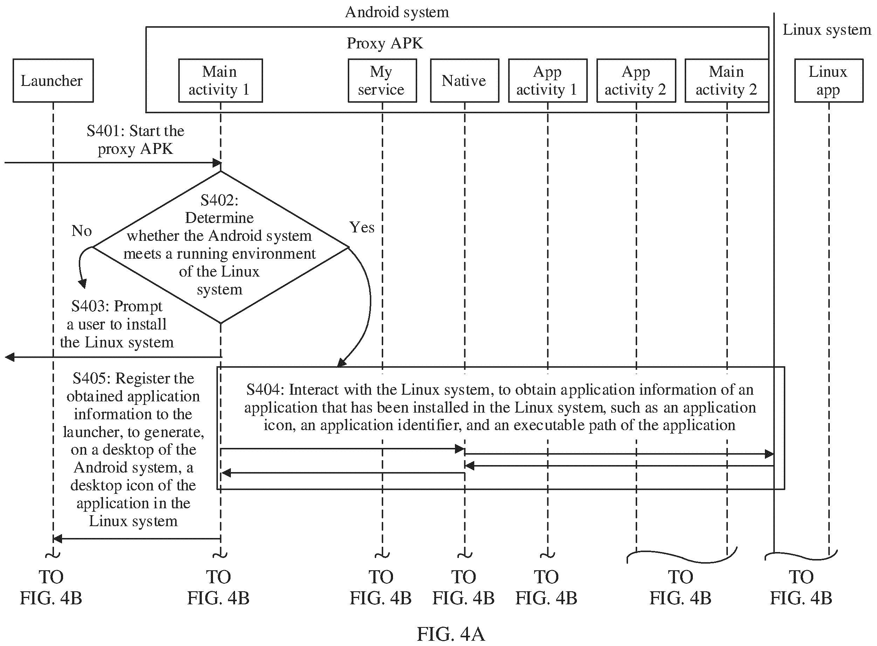

For example, FIG. 4A to FIG. 4C show a method for performing an operation on an application across systems. In FIG. 4A to FIG. 4C, for ease of description, an example in which an electronic device may be equipped with an Android system and a Linux system, and the Android system may be a primary system of the electronic device is used for description. Certainly, the electronic device may alternatively be equipped with another system, and the primary system of the electronic device may alternatively be another system. This is not limited herein. As shown in FIG. 4A to FIG. 4C, the method for performing an operation on an application across systems may include the following steps.

S401: After detecting a launch operation triggered by a user for a proxy APK installed in the Android system, the electronic device may launch a main activity (main activity 1) of the proxy APK.

S402: The main activity 1 determines whether the Android system meets a running environment of the Linux system. When the Android system meets the running environment of the Linux system, perform S404, or when the Android system does not meet the running environment of the Linux system, perform S403.

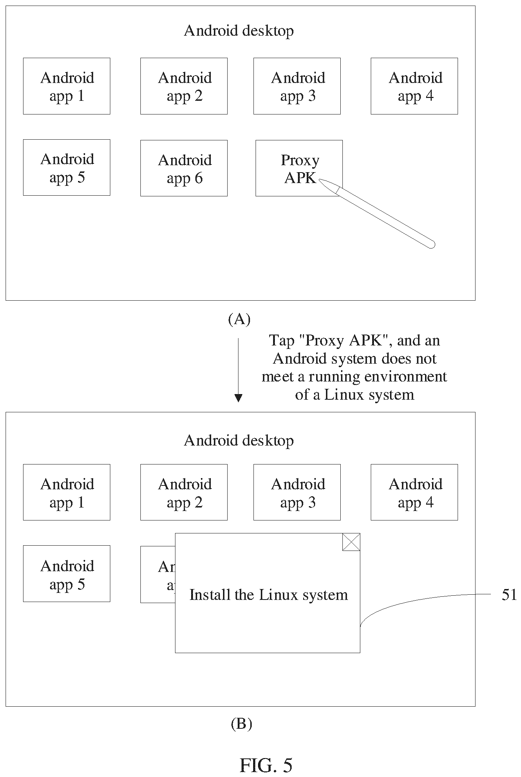

When determining whether the Android system meets the running environment of the Linux system, the main activity 1 may first determine, based on an installation directory in the Android system, whether an installation directory of a container for running the Linux system exists in the Android system. When the installation directory of the container for running the Linux system exists in the Android system, because the Linux system is generally preconfigured in the container, it may be determined that the Android system meets the running environment of the Linux system. When the installation directory of the container for running the Linux system does not exist in the Android system, whether an image package related to the Linux system exists in the Android system may be determined then. When the image package related to the Linux system exists in the Android system, the image package may be automatically installed, so that the Linux system is installed in the Android system. When the image package related to the Linux system does not exist in the Android system, it indicates that the Android system does not meet the running environment of the Linux system in this case. Therefore, the user may be prompted to manually install the Linux system. For example, as shown in (A) in FIG. 5, after the user taps "Proxy APK", the main activity 1 determines that the Android system does not meet the running environment of the Linux system. In this case, a prompt box 51 may pop up on a desktop of the Android system, and the prompt box may notify the user to manually install the Linux system. That is, an interface shown in (B) in FIG. 5 is displayed.

S403: Prompt the user to install the Linux system. After the Linux system is successfully installed by the user, automatically perform S404, or the user may manually perform S404.

S404: The main activity 1 interacts with the Linux system, to obtain application information of an application that has been installed in the Linux system, such as an application icon, an application identifier, and an executable path of the application.

When the Linux system is not run, the main activity 1 may send a start instruction to the Linux system, to start the Linux system. After the Linux system is started, the main activity 1 may send a first message to the Linux system. The first message may be used to obtain the application information of the application that has been installed in the Linux system, such as the application icon, the application identifier, and the executable path of the application. After obtaining the first message, the Linux system may send a second message to the main activity 1. The second message may include the application information of the application that has been installed in the Linux system, such as the application icon, the application identifier, and the executable path of the application. The main activity 1 may communicate with the Linux system through native in the proxy APK. A communication protocol between the main activity 1 and the Linux system may be, but is not limited to, a free remote desktop protocol (free remote desktop protocol, FreeRDP).

S405: The main activity 1 registers, with a desktop launcher (launcher) of the Android system, the obtained application information of the application that has been installed in the Linux system such as the application icon, the application identifier, and the executable path of the application, to generate, on the desktop of the Android system, a desktop icon of the application in the Linux system.

In some embodiments, the main activity 1 may automatically end running after generating, on the desktop of the Android system, the desktop icon of the application in the Linux system is completed.

At this time, the desktop icon of the application in the Linux system may be displayed on the desktop of the Android system. For example, in this case, a picture displayed on the desktop of the Android system may be shown in (B) in FIG. 3.

In some embodiments, S401 to S405 are not necessary steps of the method. In other words, S401 to S405 are not performed each time the method is performed.

After generating, on the desktop of the Android system, the desktop icon of the application in the Linux system is completed, the user may select, on the desktop of the Android system, the desktop icon of the application in the Linux system, to start, in the Android system, the application in the Linux system. For details, refer to the following description.

S406: When the electronic device detects a trigger event performed by the user on an icon of a target application in the desktop icon that is for the Linux system and that is generated on the Android desktop, create a main activity (main activity 2) in the proxy APK.

When the user needs to start the target application in the Linux system, the user may perform, on the desktop of the Android system of the electronic device, an operation (for example, a tap operation) on the desktop icon of the target application in the Linux system, and then the electronic device may detect the trigger event through the desktop launcher (launcher) of the Android system, and an activity manager service AMS of the Android system creates the main activity 2 in the proxy APK.

S407: The main activity 2 notifies the Linux system to start the target application in the Linux system, and notifies the proxy APK to create an app activity (app activity 1) associated with the target application.

The main activity 2 may send a third message to the Linux system. The third message may include information such as an application identifier of the target application and an executable path of the target application. After obtaining the third message, the Linux system may learn of the target application that the user needs to start and a corresponding start path (namely, the executable path), and start the target application.

In addition, the main activity 2 may further notify the proxy APK to create the app activity 1 associated with the target application. After completing the foregoing work, the main activity 2 may automatically end running.

In addition, the proxy APK may further register, with myservice of the proxy APK, the app activity 1 created by the proxy APK, so that myservice manages the app activity 1.

S408: The app activity 1 interacts with the Linux system, to display, in the Android system, an application interface of the target application.

After the Linux system runs the target application, the target application may automatically draw the application interface of the target application based on a resource of the target application, and send the application interface of the target application to Weston of the Linux system. Weston may forward the application interface of the target application to the app activity 1 that is associated with the target application and that is in the proxy APK in the Android system. After obtaining the application interface of the target application, the app activity 1 may display the application interface of the target application. In addition, after the application interface of the target application in the Linux system is refreshed, the Linux system may also send refresh information to the app activity 1 that is associated with the target application and that is in the proxy APK, so that the app activity 1 that is associated with the target application and that is in the proxy APK refreshes the application interface that is of the target application and that is displayed in the Android system. In this way, the application interface that is of the target application and that is displayed on the desktop of the Android system keeps synchronized with an application interface that is of the target application and that is displayed on a desktop of the Linux system.

In a process in which the target application draws the interface, the target application may first request a window from Weston. Weston may allocate a window to the target application based on configured data. Then, the target application may obtain, through drawing in the allocated window based on the resource of the target application, the application interface of the target application.

The window allocated by Weston may correspond to information such as a window identifier, a window size, and a window location. The window identifier uniquely indicates the window. The window size indicates a size of the window. The window location indicates a location for displaying the window.

In addition, when Weston forwards the application interface of the target application, window information of the window allocated by Weston to the target application may be further carried. The window information may include the window identifier, the window size, the window location, and the like.

It should be noted that, during actual application, the interface drawn by the application may include one or more layers. When a plurality of layers are included, a compositor of Weston may combine all of the layers based on information such as a stacking relationship between all of the layers and transparency of all of the layers, to obtain a composited application interface. For ease of description, in this embodiment of this application, an example in which the interface of the target application includes one layer is used for description. A quantity of layers included in the interface of the target application is not limited in embodiments of this application.

After the application interface of the target application is displayed in the Android system, the user may browse, on the desktop of the Android system, content in the application interface of the target application, and perform a corresponding operation. It may be understood that, when the application interface of the target application is displayed on the desktop of the Android system, the Linux system is also being run, and is being run on a background of the Android system.

At this time, starting and displaying, on the desktop of the Android system, the target application in the Linux system are completed. Then, the user may perform, in the application interface that is of the target application and that is displayed on the desktop of the Android system, an operation on the target application. For details, refer to the following description.

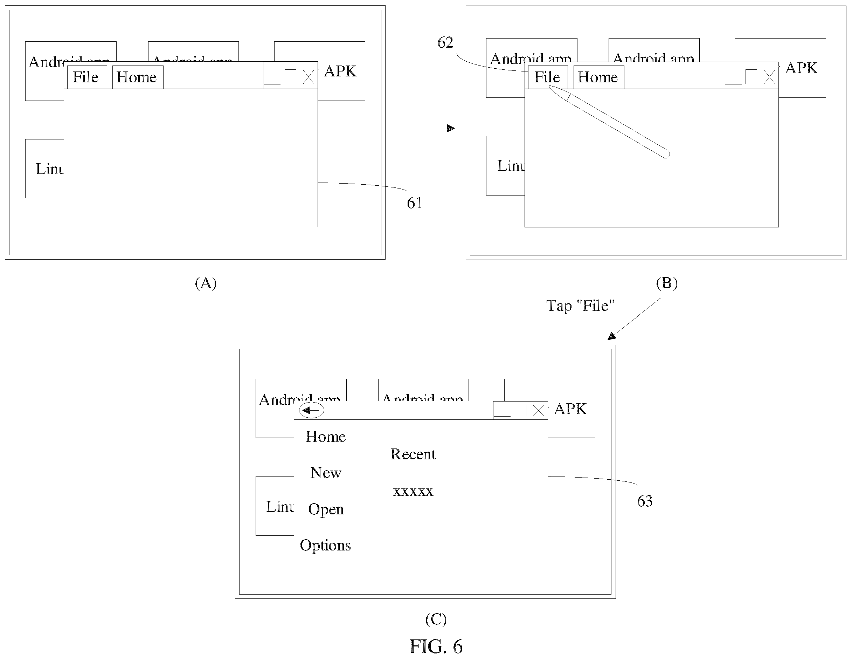

S409: The app activity 1 corresponding to the target application detects a start event performed by the user on a sub-interface in the application interface of the target application, and the app activity 1 sends the start event to the Linux system. The app activity 1 corresponding to the target application may monitor in real time an operation event performed by the user on the application interface of the target application, for example, an event of displaying the window, moving the window, maximizing the window, minimizing the window, making the window full-screen, dragging the window, or closing the window. In an example, the sub-interface in the application interface of the target application may be a new interface opened in the application interface. For example, as shown in FIG. 6, an interface 61 displayed in (A) in FIG. 6 may be the application interface of the target application. In (B) in FIG. 6, the user may tap a "File" control 62 in the application interface 61. After the user taps the "File" control 62, the interface 61 may be switched to an interface 63 shown in (C) in FIG. 6. The interface 63 may be referred to as a sub-interface of the interface 61.

S410: The Linux system draws, based on the obtained start event, the sub-interface related to the start event, and sends the sub-interface to the proxy APK, so that the proxy APK creates an app activity corresponding to the sub-interface. After obtaining the start event, the Linux system may draw, in a manner of drawing the application interface of the target application, the sub-interface related to the start event.

S411: After obtaining the sub-interface sent by the Linux system, the proxy APK may create the app activity (app activity 2) corresponding to the sub-interface. The proxy APK may obtain, through myservice in the proxy APK, the sub-interface sent by Linux, and send, to the activity manager service AMS in the Android system through myservice, a requirement to create the app activity 2. After learning of the requirement of myservice, the activity manager service AMS may create the app activity 2 in the proxy APK. In this way, a sub-interface that is of the target application and that is required by the user may be displayed on the desktop of the Android system, and the user may perform a corresponding operation on the sub-interface.

It may be understood that, one app activity is created for each of different interfaces of one target application, so that an app activity corresponding to a specific interface can accurately identify an operation performed by the user on the interface. This avoids a case in which one target application corresponds to only one app activity and therefore it is difficult for the app activity to accurately identify an operation of the user. As a result, the operation of the user can be responded to in real time, and user experience is improved.

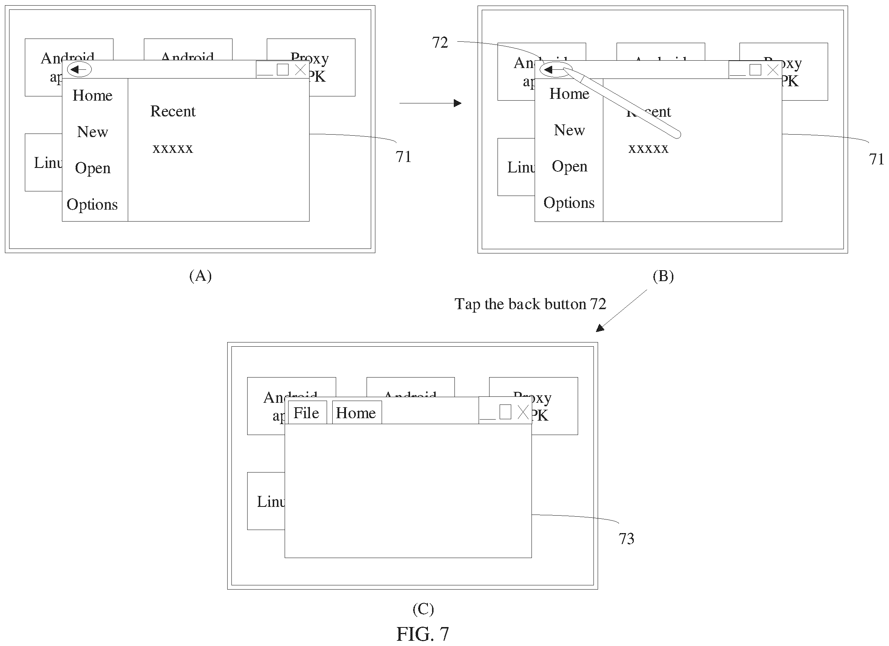

In some embodiments, when an app activity corresponding to a sub-interface in a specific application collects a close event that is input by the user and that is for closing the sub-interface, the app activity may feed back the close event to the Linux system. After obtaining the close event, the Linux system may close the sub-interface corresponding to the app activity, and feed back information in which the Linux system closes the interface to myservice in the proxy APK. After obtaining the information fed back by the Linux system, myservice in the proxy APK may end a life cycle of the app activity. In this way, a sub-interface that the user needs to close can be closed on the desktop of the Android system. For example, refer to FIG. 7. In (A) in FIG. 7, what is currently displayed is a sub-interface 71 of a specific application. In (B) in FIG. 7, after the user chooses to return to a home screen (that is, taps a back button 72), a currently displayed interface may be switched from the sub-interface 71 to a home screen 73. In an operation process shown in FIG. 7, a life cycle of an app activity corresponding to the sub-interface 71 is switched from a running stage to a destroying stage. The life cycle of the app activity ends in the destroying stage.

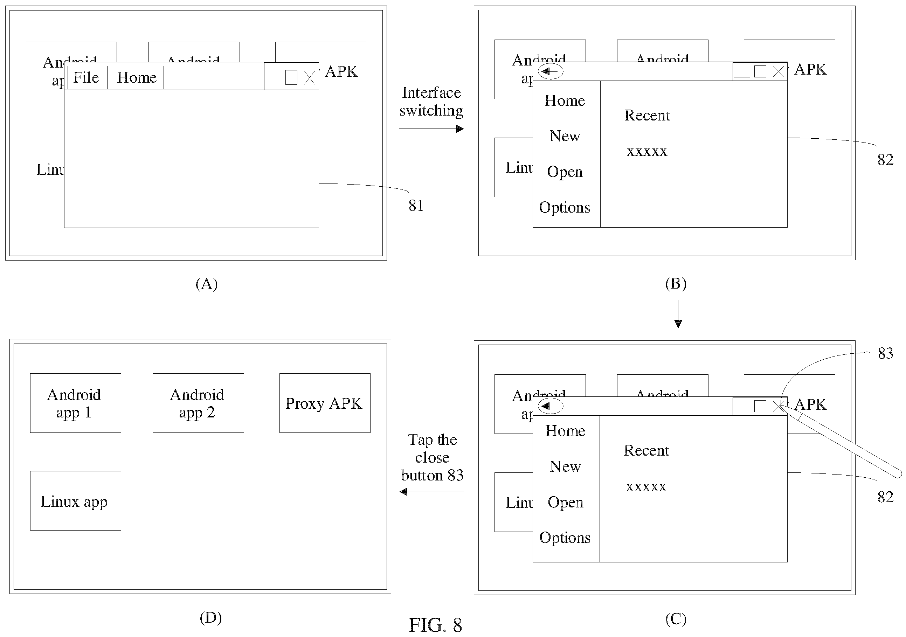

In addition, when the user shuts down a specific application, an app activity corresponding to a home screen of the application (that is, an app activity that is created when the user starts the application for the first time) may collect an event, and feed back the event to the Linux system. When learning of the event, the Linux system may shut down the application corresponding to the app activity, and feed back the close event to myservice in the proxy APK. After obtaining the information fed back by the Linux system, myservice in the proxy APK may end a life cycle of each app activity related to the application. In this way, on the desktop of the Android system, the application in the Linux system may be shut down in the Android system. For example, refer to FIG. 8. In (A) in FIG. 8, a home screen 81 of a specific application is displayed on the electronic device. In (B) in FIG. 8, a display interface of the application is switched from the home screen 81 to a sub-interface 82. In (C) in FIG. 8, the user chooses to shut down the application. After the application is closed, the electronic device may display an interface shown in (D) in FIG. 8. In (A) in FIG. 8, the proxy APK in the electronic device may create an app activity 1 corresponding to the home screen 81. In (B) in FIG. 8, the proxy APK in the electronic device may create an app activity 2 corresponding to the sub-interface 82. In this case, there are, in the proxy APK, two app activities related to the application. In (D) in FIG. 8, the proxy APK may simultaneously or sequentially end a life cycle of the app activity 1 corresponding to the home screen 81 and a life cycle of the app activity 2 corresponding to the sub-interface. In this way, on the desktop of the Android system, the application in the Linux system can be shut down in the Android system.

Therefore, a solution for managing a life cycle of an activity in the Android system is used, and a process of starting an application in the Linux system is embedded in the Android system, so that the user can quickly start the application in the Linux system by tapping a desktop icon that is of the application in the Linux system and that is displayed on the desktop of the Android system. As a result, a manner of starting a Linux application and a manner of starting an Android application are the same, the user can perform, in the Android system, an operation on the Linux application without distinction, and user experience is improved. In addition, on the desktop of the Android system, the application in the Linux system may not be controlled in a simulator window, so that the user can perform any operation such as dragging, on the desktop of the Android system, on an application interface of the application in the Linux system.

For ease of understanding, the following uses an example for description.

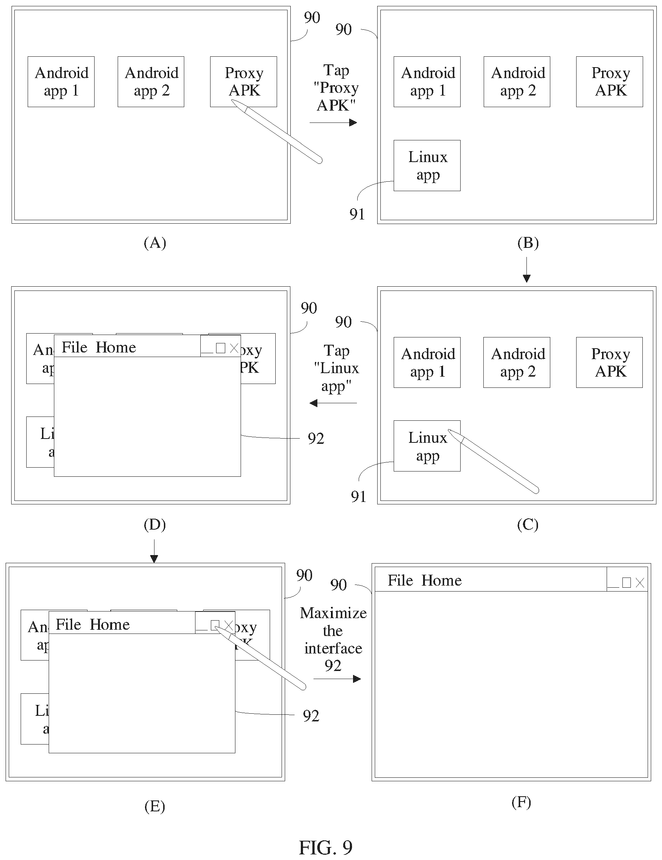

For example, FIG. 9 shows a process of running a Linux application in an Android system. As shown in FIG. 9, an electronic device 90 is equipped with the Android system and a Linux system, and a primary system of the electronic device 90 is the Android system. In (A) in FIG. 9, a desktop of the Android system is displayed on the electronic device. Three applications, to be specific, an Android app 1, an Android app 2, and a proxy APK, are installed in the Android system.

In (A) in FIG. 9, a user may tap an icon of the application "Proxy APK". Then, the proxy APK in the Android system may interact with the Linux system, generate, on the desktop of the Android system, a desktop icon of an application that has been installed in the Linux system, and display an interface shown in (B) in FIG. 9. In (B) in FIG. 9, the desktop icon of the application that has been installed in the Linux system is generated, on the desktop of the Android system, as a Linux app 91. Then, the user may start, on the Android desktop, the application in the Linux system. In (C) in FIG. 9, the user may tap the desktop icon Linux app 91 that is of the Linux application and that is on the desktop of the Android system. After the user taps the desktop icon Linux app 91, an application interface of an application corresponding to the desktop icon Linux app 91 may be displayed in the Android system. In other words, an interface shown in (D) in FIG. 9 is displayed. In (D) in FIG. 9, an interface 92 may be the application interface of the application corresponding to the desktop icon Linux app 91. In (D) in FIG. 9, the user may perform an operation on the interface 92 according to a requirement. In (E) in FIG. 9, the user may choose to maximize the interface 92. After the user performs selection, an interface shown in (F) in FIG. 9 may be displayed on the electronic device 90. In this case, the interface 92 is fully covered on a display screen of the electronic device 90, that is, fully covered on the desktop of the Android system on the electronic device 90.

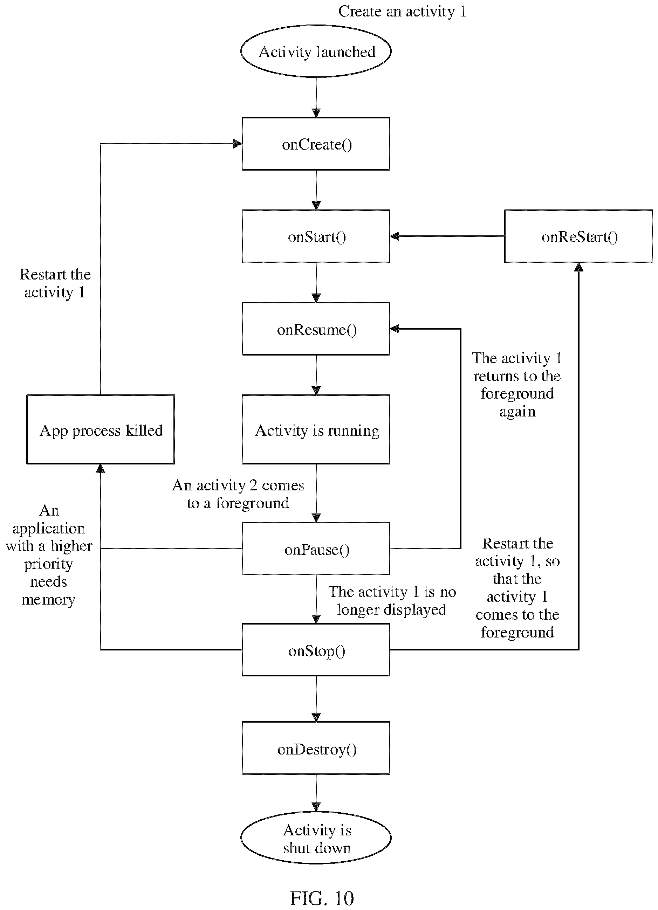

For example, FIG. 10 shows a process of managing a life cycle of an activity in an Android system. When a user switches between interfaces, the activity also switches between a plurality of states, for example, between a visible state and an invisible state, or between a foreground state and a background state. When the activity switches between different states, different life cycle methods may be called back. An activity type may provide many callbacks. These callbacks enable the activity to know that a specific state has been changed, for example, a system is creating, stopping, or resuming a specific activity, or is destroying a process in which the activity is located. The activity type provides, for navigation and switching between each of stages of the life cycle of the activity, six core callbacks: onCreate(), onStart(), onResume(), onPause(), onStop(), and onDestroyQ. When the activity enters a new state, the system may invoke one or more of the callbacks.

For example, in an onCreate() stage, when the activity is tapped (Activity Launched), the system may invoke onCreate() of an activity 1. In this stage, the activity 1 may be initialized. For example, load a layout through setContentView, or initialize some controls and variables. In this case, the activity 1 is in a background and is invisible.

After the onCreate() stage is completed, a life cycle of the activity 1 enters an onStart() stage. In this case, the activity 1 is in the visible state, but is still not displayed in the foreground and cannot interact with the user. In this stage, animation in the activity 1 may be initialized.

After the onStartQ stage is completed, the life cycle of the activity 1 enters an onResume() stage. In the onResume() stage, the activity 1 is in a running state (activity is running), and the activity 1 can interact with the user.

When another activity (for example, an activity 2) overwrites the activity 1 to enter a foreground interface, the life cycle of the activity 1 may enter an onPouse() stage. In this stage, the activity 1 is visible but cannot interact with the user.

After the onPouse() stage is completed, the life cycle of the activity 1 may enter an onStop() stage. In this case, the activity 1 is invisible to the user, and may be reclaimed by the system in low system memory.

After the onStop() stage is completed, the life cycle of the activity 1 enters an onDestory() stage. In this stage, the activity 1 may be destroyed. After the onDestory() stage is completed, the activity 1 is shut down (activity is shut down), and the life cycle of the activity 1 ends.

In addition, after the onPouse() stage is completed, if the user re-invokes the activity 1 to the foreground interface, the activity 1 may overwrite the activity 2. In this case, the life cycle of the activity 1 may enter the onResume() stage again.

After the onStop() stage is completed, when the activity 2 is switched to the activity 1 or when a desktop returns to the activity 1, that is, returns to the activity 1, the life cycle of the activity 1 may enter onRestart(). An operation may be not performed in the onRestart() stage. The life cycle of the activity 1 may enter the onStartQ stage through the stage.

In addition, in the low system memory, when an application with a higher priority needs memory, a process in which the activity 1 with a lower priority is located may be killed, to reclaim the memory. When the user switches to the activity 1 again, the life cycle of the activity 1 may enter the onCreate() stage again.

With reference to FIG. 10, the following describes a life cycle of an activity in the method for running an application across systems described in FIG. 4A to FIG. 4C.

### (1) For a process of displaying, on a desktop of an Android system, an application icon of an application in a Linux system

As shown in FIG. 10, after tapping an icon of a proxy APK, a user may launch a main activity corresponding to the proxy APK (that is, the step described in S401 in FIG. 4A). In this case, the main activity starts to run and enters a "created" state, that is, an activity launched stage in FIG. 10. In this case, creating an activity 1 in FIG. 10 may be understood as creating the main activity.

Then, an onCreate() stage is entered. In the onCreate() stage, the activity 1 may determine whether a container environment on which the Linux application depends has been installed. If not, the activity 1 prompts the user to install, and complete the installation in a current thread. If the container environment on which the Linux application depends has been installed, the activity 1 may independently start a thread on a background, to invoke a basic environment for running the Linux system (that is, the step described in S402 and S403 in FIG. 4A and the step for starting the Linux system described in S404).

Then, an onStart() stage is entered. In the onStart() stage, the activity 1 may monitor /usr/share/applications/*.desktop and icon directories in the Linux system by using an applist function, to obtain application information, for example, an application name, an executable file path, and an application icon of an application that has been installed in the Linux system (that is, the step, described in S404 in FIG. 4A, of obtaining application information of an application that has been installed in the Linux system, such as an application icon, an application identifier, and an executable path of the application). After obtaining the application information of the application in the Linux system, the activity 1 may dynamically register the information with the desktop of the Android system. Then, an obtained desktop icon of the Linux application is automatically generated on the desktop of the Android system (that is, the step described in S405 in FIG. 4A). In addition, after the application in the Linux system is uninstalled, a background service in the Android system may still scan the foregoing directories in the Linux system, to implement an operation of dynamically removing a shortcut icon of the Linux application from the desktop of the Android system.

Then, an onResume() stage is entered. In the onResume() stage, the activity 1 may send a message through handler to enable a myservices service, to perform channel connection with an invoked Linux container through myservice. In this way, subsequent initialization such as inputting, window, and session may be performed through myservice.

Then, an onDestory() stage may be entered through an activity is running stage, the onPause() stage, and the onStop() stage. In the onDestory() stage, the activity 1 may automatically end running. At this time, the life cycle of the activity 1 ends. For example, the activity 1 may not perform an operation in the activity running stage, the onPause() stage, and the onStop() stage, and only needs to perform a procedure.

### (2) For a process of starting a Linux application by using a desktop icon on an Android system

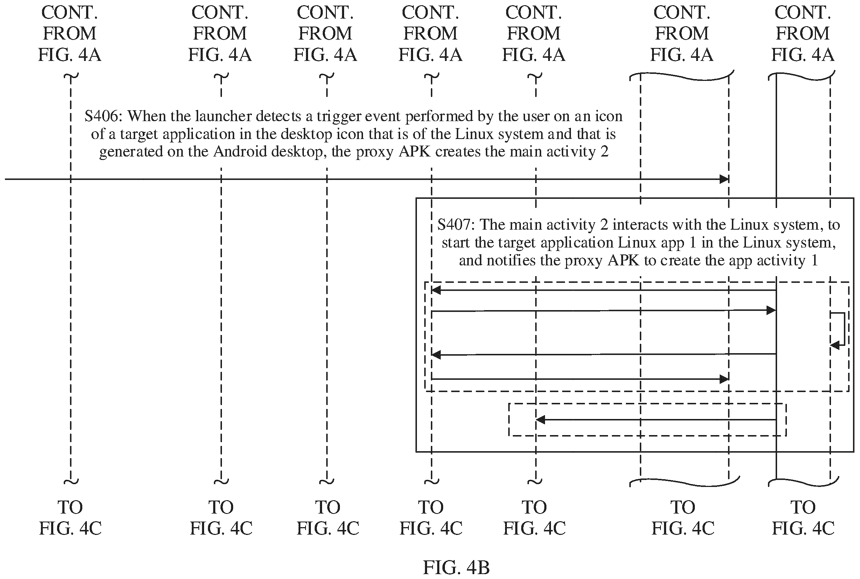

As shown in FIG. 10, after tapping the application icon of the Linux application on a desktop of the Android system (briefly referred to as a "target application" below), a new main activity 2 may be created in a proxy APK (that is, the step described in S406 in FIG. 4B). The main activity 2 may send, in an onCreate() stage, information including an application identifier of the target application, an executable path of the target application, and the like to the Linux system by using myservice, to start the target application in the Linux system (that is, some of the steps described in S407 in FIG. 4B). The main activity 2 may recreate (fork) an application process of the target application, and then inform, through a JNI interface callback, a proxy APK of invoking a new app activity, and establish a mapping relationship with the target application that is on the Linux side and that is tapped by the user (that is, some of the steps described in S407 in FIG. 4B).

Then, the main activity 2 may enter an onDestory() stage through an onStart() stage, an onResume() stage, an activity is running stage, an onPause() stage, and an onStop() stage. In the onDestory() stage, the main activity 2 may automatically end running. At this time, a life cycle of the main activity 2 ends. For example, the main activity may not perform an operation in the onStart() stage, the onResume() stage, the activity is running stage, the onPause() stage, and the onStop() stage, and only needs to perform a procedure.

A life cycle of an app activity invoked by the proxy APK may alternatively be the life cycle of the activity shown in FIG. 10. In each stage of the life cycle of the app activity, the app activity may monitor an event, performed on a window of the target application associated with the app activity, of displaying the window, moving the window, maximizing the window, minimizing the window, making the window full-screen, dragging the window, closing the window, or the like, and transmit the event to the Linux system through a protocol (for example, FreeRDP). In addition, the Linux system may also return a result of a response event to the app activity through the protocol, so that the app activity performs corresponding processing, for example, adjust a window size. After the app activity detects an event for shutting down the target application, the app activity may enter the onDestory() stage, and remove the window from the desktop of the Android system, to implement shut-down experience the same as that of a common Android system.

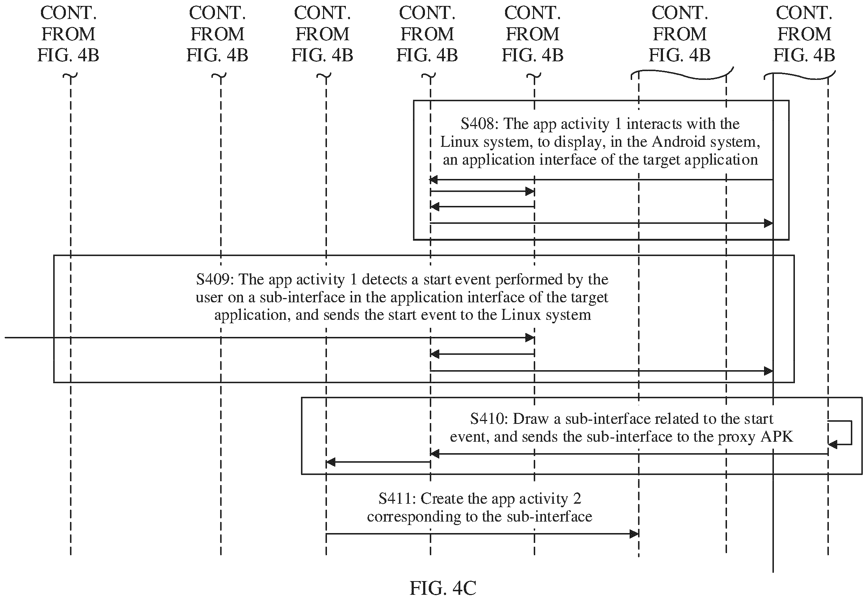

In addition, after the app activity detects that the user opens a sub-interface in a home screen of the target application, the proxy APK may invoke an app activity corresponding to the sub-interface, to monitor, by using the app activity corresponding to the sub-interface, an operation performed on the sub-interface by the user (that is, the steps described in S410 and S411 in FIG. 4C). A life cycle of the app activity corresponding to the sub-interface may also be the life cycle shown in FIG. 10. In addition, after the proxy APK invokes an app activity corresponding to the sub-interface, an app activity corresponding to the home screen of the target application (that is, the app activity invoked by the proxy APK notified by the foregoing main activity) may enter the onPause() stage or enter the onStop() stage.

It may be understood that sequence numbers of the steps do not mean execution sequences in the foregoing embodiments. The execution sequences of the processes should be determined based on functions and internal logic of the processes, and should not constitute any limitation on the implementation processes of embodiments of this application.

An embodiment of this application further provides, corresponding to the method for running an application across systems in the foregoing embodiment, an apparatus for running an application across systems. The apparatus has a function of implementing the method for running an application across systems described above. Details are not described herein again.

It may be understood that the electronic device in embodiments of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and/or the like. An example embodiment of the electronic device includes but is not limited to an electronic device equipped with an iOS, Android, Windows, HarmonyOS (HarmonyOS), or another operating system. A specific type of the electronic device is not specifically limited in embodiments of this application.

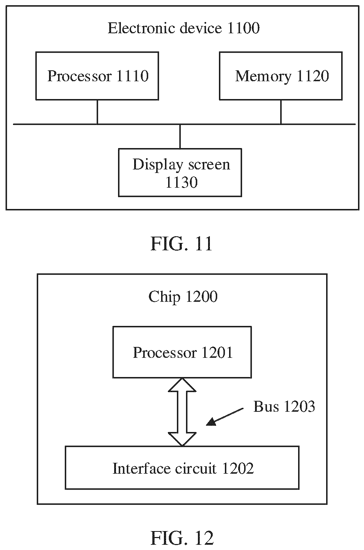

The following describes an electronic device in embodiments of this application. FIG. 11 is a diagram of a structure of an electronic device according to an embodiment of this application. The electronic device may be, but is not limited to, equipped with at least two software systems, for example, equipped with an Android system and a Linux system.

As shown in FIG. 11, the electronic device 1100 may include a processor 1110, a memory 1120, and a display screen 1130.

The processor 1110 may be a general-purpose processor or a dedicated processor. For example, the processor 1110 may include a central processing unit (central processing unit, CPU) and/or a baseband processor. The baseband processor may be configured to process communication data. The CPU may be configured to: implement corresponding control and processing functions, execute a software program, and process data of the software program.

For example, the processor 1110 may include one or more processing units. The processor 1110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU) and/or the like. Different processors may be independent components, or may be integrated into one or more processors.

The memory 1120 may store a program, and the program may be run by the processor 1110, so that the processor 1110 performs the method described in embodiments of this application. The memory 1120 may further store data. The processor 1110 may read the data stored in the memory 1120. The memory 1120 and the processor 1110 may be separately disposed. Optionally, the memory 1120 may alternatively be integrated into the processor 1110.

The display screen 1130 is configured to display an image, a video, or the like. The display screen 1130 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, OLED), or the like. For example, the display screen 1130 may be, but is not limited to, a foldable screen, to be specific, a display screen that can be folded. For example, the display screen 1130 may be configured to display an icon of the Android application, an icon of the Linux application, and/or the like.

It may be understood that a structure shown in this embodiment of this application does not constitute a specific limitation on the electronic device 1100. In some other embodiments of this application, the electronic device 1100 may include more or fewer components than those shown in the figure, or some components may be combines, or some components may be split, or different component arrangements may be used. The components shown in the figure may be implemented in hardware, software, or a combination of software and hardware.

According to the method described in the foregoing embodiments, an embodiment of this application further provides a chip. FIG. 12 is a diagram of a structure of a chip according to an embodiment of this application. As shown in FIG. 12, the chip 1200 includes one or more processors 1201 and an interface circuit 1202. Optionally, the chip 1200 may further include a bus 1203.

The processor 1201 may be an integrated circuit chip, and has a signal processing capability. In an implementation process, the steps in the foregoing method may be performed by using a hardware integrated logic circuit in the processor 1201 or instructions in a form of software. The processor 1201 may be a general-purpose processor, a neural-network processing unit (Neural-Network Processing Unit, NPU), a digital communicator (DSP), an application-specific integrated circuit (ASIC), a field programmable gate array (FPGA), another programmable logic device, a discrete gate or a transistor logic device, a discrete hardware component, or the like. The processor 1201 may implement or perform the methods and steps that are disclosed in embodiments of this application. The general-purpose processor may be a microprocessor, or the processor may be any conventional processor or the like.

The interface circuit 1202 may be configured to send or receive data, instructions, or information. The processor 1201 may process the data, the instructions, or other information received by the interface circuit 1202, and send, through the interface circuit 1202, processing completion information.

Optionally, the chip 1200 further includes a memory. The memory may include a read-only memory and a random access memory, and provide operation instructions and data for the processor. A part of the memory may further include a non-volatile random access memory (NVRAM). The memory may be coupled to the processor 1201.

Optionally, the memory stores an executable software module or a data structure, and the processor 1201 may perform a corresponding operation by invoking operation instructions (the operation instructions may be stored in an operating system) stored in the memory.

Optionally, the interface circuit 1202 may be configured to output an execution result of the processor 1201.

It should be noted that functions respectively corresponding to the processor 1201 and the interface circuit 1202 may be implemented by using a hardware design, may be implemented by using a software design, or may be implemented in a combination of software and hardware. This is not limited herein.

It should be understood that the steps in the foregoing method embodiments may be implemented by using a logic circuit in a form of hardware or instructions in a form of software in the processor.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art. For example, a storage medium is coupled to a processor, so that the processor can read information from the storage medium and write the information into the storage medium. Certainly, the storage medium may alternatively be a component of the processor. The processor and the storage medium may be disposed in the ASIC.

All or some of the foregoing embodiments may be implemented by software, hardware, firmware, or any combination thereof. When the software is used to implement embodiments, all or some of embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in the computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A method for running an application across systems, applied to an electronic device, wherein the electronic device is equipped with a first software system and a second software system, and the second software system is run based on the first software system; and
the method comprises:
in response to an obtained first operation, obtaining, through the first software system, application information of at least one target application in the second software system, wherein the target application is an application that has been installed in the second software system, and the application information comprises one or more of an icon, an identifier, and an executable path that are of the target application; and
displaying, in the first software system, a desktop icon of the target application.

2. The method according to claim 1, wherein the first software system is an Android system, and the second software system is a Linux system.

3. The method according to claim 1 or 2, wherein the obtaining, through the first software system, application information of at least one target application in the second software system specifically comprises:
launching, in the first software system, a first main activity in a proxy Android application package APK based on the first operation;
sending a first message to the second software system by using the first main activity, wherein the first message is used to obtain the application information of the at least one target application in the second software system; and
obtaining, by using the first main activity, a second message fed back by the second software system, wherein the second message comprises the application information of the at least one target application.

4. The method according to claim 3, wherein the displaying, in the first software system, a desktop icon of the target application specifically comprises:
registering the application information of the target application with a desktop launcher launcher of the first software system by using the first main activity, to display, in the first software system, the desktop icon of the target application.

5. The method according to claim 3 or 4, wherein after the displaying, in the first software system, a desktop icon of the target application, the method further comprises:
controlling the first main activity to end running.

6. The method according to any one of claims 3 to 5, wherein before the sending a first message to the second software system by using the first main activity, the method further comprises:
determining, by using the first main activity, whether the first software system meets a running environment of the second software system; and
if yes, sending the first message to the second software system by using the first main activity; or
if no, automatically installing the second software system, or displaying prompt information on a display interface of the first software system, wherein the prompt information is used to prompt to install the second software system.

7. The method according to any one of claims 1 to 6, wherein after the displaying, in the first software system, a desktop icon of the target application, the method further comprises:
in response to an obtained second operation, launching, in the first software system, a second main activity in the proxy Android application package APK, wherein the second operation is an operation of starting the target application;
notifying, by using the second main activity, the second software system to start the target application, and the proxy APK to create a first application activity associated with the target application;
obtaining, by using the app activity 1, an application interface that is of the target application and that is sent by the second software system; and
displaying, in the first software system, the application interface of the target application.

8. The method according to claim 7, wherein after the notifying, by using the second main activity, the second software system to start the target application, and the proxy APK to create a first application activity associated with the target application, the method further comprises:
controlling the second main activity to end running.

9. The method according to claim 7 or 8, wherein after the displaying, in the first software system, the application interface of the target application, the method further comprises:
obtaining a third operation by using the app activity 1, wherein the third operation is an operation of launching a sub-interface in the application interface;
notifying, by using the app activity 1, the second software system to launch the sub-interface in the application interface;
obtaining, by using the proxy APK, the sub-interface in the application interface sent by the second software system, and creating a second application activity associated with the sub-interface; and
displaying, in the first software system, the sub-interface in the application interface.

10. The method according to claim 9, wherein after the displaying, in the first software system, the sub-interface in the application interface, the method further comprises:
controlling the app activity 1 to suspend running.

11. The method according to claim 9 or 10, wherein after the displaying, in the first software system, the sub-interface in the application interface, the method further comprises:
in response to an operation that is of closing the sub-interface and that is obtained by the app activity 2, controlling the app activity 2 to end running, and/or controlling the app activity 1 to switch from a running-suspended state to a running-resumed state.

12. The method according to any one of claims 7 to 11, wherein after the displaying, in the first software system, the application interface of the target application, the method further comprises:
in response to an operation that is of closing the application interface and that is obtained by the app activity 1, controlling the app activity 1 to end running, wherein
when the app activity 2 associated with the sub-interface in the application interface is created, the proxy APK controls the app activity 2 associated with the sub-interface in the application interface to end running.

13. An electronic device, comprising a processor, wherein the processor is configured to run a computer program stored in a memory, so that the electronic device performs the method according to any one of claims 1 to 12.

14. A computer-readable storage medium, wherein the computer-readable storage medium stores a computer program, and when the computer program is executed by a processor, the method according to any one of claims 1 to 12 is performed.

15. A computer program product, wherein when the computer program product runs on an electronic device, the electronic device is enabled to perform the method according to any one of claims 1 to 12.

16. A chip, comprising at least one processor and an interface, wherein
the at least one processor obtains program instructions or data through the interface; and
the at least one processor is configured to execute the program instructions, to perform the method according to any one of claims 1 to 12.
